(19) Europäisches Patentamt
European Patent Office
Office européen des brevets

(11) **EP 3 477 560 A1**

(12) **EUROPEAN PATENT APPLICATION**

(43) Date of publication:
01.05.2019  Bulletin 2019/18

(51) Int Cl.:
*G06Q 10/04* (2012.01)    *G06Q 10/06* (2012.01)

(21) Application number: **18203381.1**

(22) Date of filing: **30.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **31.10.2017   US 201762579463 P**

(71) Applicant: **Huntington Ingalls Incorporated
Newport News, VA 23607 (US)**

(72) Inventors:
• **SLAGLE, Ian
Newport News
Virginia 23607 (US)**

• **WHITEHEAD, Joshua
Newport News
Virginia 23607 (US)**
• **VAN ITALLIE, John
Mechanicsville
Virginia 23111 (US)**
• **GLENN, John
Newport News
Virginia 23607 (US)**
• **WOLFE, Justin
Newport News
Virginia 23607 (US)**

(74) Representative: **Latham, Stuart Alexander
Withers & Rogers LLP
4 More London Riverside
London SE1 2AU (GB)**

(54)    **METHOD AND SYSTEM FOR MANAGEMENT AND CONTROL**

(57)    A data processing system determines for all tasks in a project, material requirements and constraints, resource requirements and constraints, and a task uncertainty model. A task sequence and a critical chain are determined and an estimated project schedule including a project buffer is constructed. At the beginning of a project execution time interval the data processing system determines a criticality value for every task using the task uncertainty model, current criticality factor information, and task status information for tasks that are in-work. Project tasks are then prioritized based at least in part on task criticality. Tasks are assigned and executed and, at the end of the time interval, task status information is passed back to the data processing system for use in redetermining task criticality and reprioritizing the tasks for the next time interval.

Figure 1

**Description**

This application claims priority to U.S. Provisional No. 62/579,463, filed October 31, 2017, the complete disclosure of which is incorporated herein by reference.

BACKGROUND OF THE INVENTION

Modem project management science has its origins traced to the release of Critical Path Project Management (CPPM) methods, invented by Dow Chemical, in the 1940s. It was supplanted, especially in aerospace and defense industries, by the Program Evaluation Review Technique (PERT) invented by the US Navy in the 1950s. The next evolution was Earned Value Management System (EVMS) invented by the US Department of Defense (DOD) and National Aeronautics and Space Administration (NASA) in the 1960s. Today, EMVS is mandated in the Defense Federal Acquisition Regulations (DFAR) for use in all DOD contracts above a certain total dollar threshold.

In the 1980s, Eli Goldratt published a theory regarding project management outside of the government and defense domain - in fact, in the manufacturing domain - called "Theory of Constraints". This was first published as a work of fiction in the book "The Goal" in 1984, and refined in subsequent works. It led to the 1985 founding of the Abraham Goldratt Institute (AGI) - named for Goldratt's father -as a non-profit research institute on TOC practices. AGI converted Goldratt's theory into a formal process called Critical Chain Project Management (CCPM) based on theory of constraints (TOC) principles, and formally published them to the world in 1997.

CCPM is based on a somewhat radical notion that task order and schedule in manufacturing are not as important as managing resources (minimizing constraints). It exposed a major shortcoming in CPPM, PERT, and EVMS - those systems ignore resources, or rather, they assume resources are infinite.

In the first decade of the new millennia, several software firms began to digitize CCPM into useful computer-based tools, and several small manufacturing firms began adopting CCPM into their practices. At the same time, several patents were filed on CCPM practices, algorithms, and tools.

Attempts have been made to integrate CCPM into existing manufacturing and EVMS reporting systems for large scale manufacturing projects. The inventors have found, however, that there are many shortcomings in CCPM theory when applied to highly variable large-scale construction such as the building of a ship. Where it might have been suitable for repetitive part manufacture on a factory floor, it failed on the platens and in drydocks.

This invention has profound implications on people, machines, and dollars invested into highly variable manufacturing and construction in the United States - such as the production of nuclear powered aircraft carriers and submarines.

SUMMARY OF THE INVENTION

An illustrative aspect of the invention provides a method for prioritizing and scheduling project tasks. The method comprises receiving, by a data processing system, required deliverable information defining a project scope comprising a plurality of completion requirements. A project task set comprising a plurality of tasks necessary to accomplish the project scope is determined by the data processing system. The method further comprises determining, by the data processing system for each task in the project task set, materials required to complete the given task, task precedence logic identifying the tasks of the task set that must be completed before the given task, and a task uncertainty model. The method still further comprises preparing, by the data processing system a task sequence for the project task set and determining, by the data processing system for each task in the project task set, a set of one or more resources required to complete the given task. The data processing system receives resource constraint information associated with the resources required for the tasks in the project task set. The method still further comprises identifying, by the data processing system a critical task chain for the project task set. The critical task chain is determined at least in part based on the task sequence and the resource constraint information. The data processing system prepares an estimated project schedule comprising the tasks in the critical chain and one or more feeder task chains. This action includes calculating and adding to the critical task chain of the project schedule a project buffer. The method also comprises, at the beginning of a current project time interval, carrying out by the data processing system a set of task criticality and scheduling actions. These actions include receiving current criticality factor information on one or more variable criticality factors associated with one or more of the project tasks and calculating a task criticality for each task of the project task set. In doing so, the system uses the task uncertainty model for the given task, the current criticality factor information, and task status information for tasks for which work has previously been initiated. The system then prioritizes the project tasks based at least in part on task criticality. The system then identifies project tasks for which work should be done during the current time interval, assigns each said task as a current work interval task to a work cell, and transmits a work request for each current work interval task to a work cell receiving station associated with the work cell to which said current work interval task is assigned. The method also comprises, at the end of the current time interval, carrying out a set of task status assessment actions. These actions include assembling, by a work metric assembly system, task status information for all current work interval tasks, and transmitting the task status information by the work metric assembly system to the data processing system. The data processing system determines whether all project tasks have been completed. If all project tasks have not been completed, the current time interval is updated and both the task criticality and scheduling actions at the beginning of the updated current time interval and the task status assessment actions at the end of the updated current time interval are repeated.

Another aspect of the invention provides a project management system comprising an automated planning data processing system configured for receiving required deliverable information defining a project scope, determining a project task set comprising a plurality of tasks necessary to accomplish the project scope, and determining for each task the materials required, task precedence logic and a task uncertainty model. The system further comprises an automated scheduling data processing system in communication with the planning data processing system and configured for preparing a task sequence for the project task set, determining for each task in the project task set, a set of one or more resources required, receiving resource constraint information, identifying a critical task chain for the project task set, and preparing an estimated project schedule including a project buffer. The system still further comprises an automated criticality data processing system in communication with the planning and scheduling data processing systems and configured for receiving current criticality factor information, receiving task status information for tasks for which work has been initiated, calculating a task criticality for each task using the task uncertainty model for the given task, the current criticality factor information, and the task status information, and prioritizing the project tasks based at least in part on their task criticality. The system also comprises an automated manufacturing scheduling data processing system in communication with the criticality data processing system and one or more work cell stations and configured for identifying project tasks for which work should be done and assigning each said task as a current work interval task to a work cell, and transmitting a work request for each current work interval task to a work cell station associated with the work cell to which said current work interval task is assigned. The system also comprises an automated metric assembly data processing system in communication with the one or more work cell stations and the planning, criticality, and manufacturing scheduling data processing systems and configured for assembling task status information for all current work interval tasks and transmitting the task status information to the criticality data processing system.

BRIEF DESCRIPTION OF THE DRAWINGS

The invention can be more fully understood by reading the following detailed description together with the accompanying drawings, in which like reference indicators are used to designate like elements, and in which:

Figure 1 is a schematic representation of aspects of a method according to an embodiment of the invention;

Figure 2 is a flow chart of a method according to an embodiment of the invention;

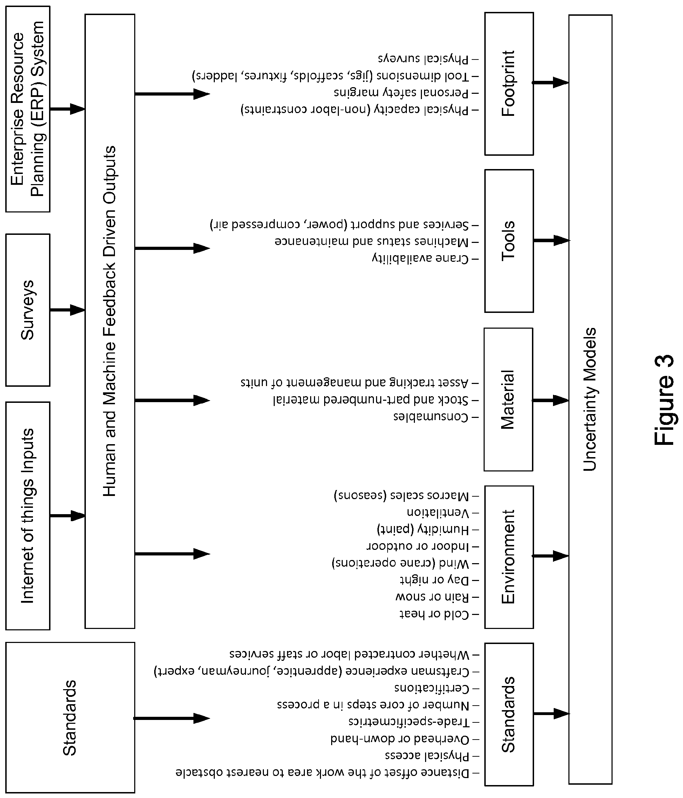

Figure 3 is a flow chart illustrating a portion of a method according to an embodiment of the invention;

Figure 4 is a flow chart of a portion of a method according to an embodiment of the invention;

Figure 5 is a flow chart of a portion of a method according to an embodiment of the invention;

Figure 6 is a flow chart of a portion of a method according to an embodiment of the invention;

Figure 7 is a block diagram of a system according to an embodiment of the invention;

Figure 8 is an example of a task evaluation score card usable in conjunction with methods of the invention;

Figure 9 is a flow chart of a portion of a method according to an embodiment of the invention; and

Figure 10 is an illustration of an illustrative dashboard interface for use in conjunction with a method according to an embodiment of the invention.

DETAILED DESCRIPTION OF THE INVENTION

While the invention will be described in connection with particular embodiments and manufacturing environments, it will be understood that the invention is not limited to these embodiments and environments. On the contrary, it is contemplated that various alternatives, modifications and equivalents are included within the spirit and scope of the invention as described.

The present invention provides a closed loop, feedback system for project planning and management. The closed loop approach involves automating the inputs, calculating criticality in unique ways, measuring the outputs, and feeding back the outputs into system inputs. This approach reduces the uncertainty - measures it in fact - and makes it possible to optimize highly variable manufacturing, which is something that Goldratt's CCPM theory says is not possible.

The methods of the invention extend traditional CCPM by addressing two fundamental drawbacks of CCPM methods and practices:

1. CCPM doesn't adequately take into account changes to project constraints during execution; and
2. CCPM doesn't analyze potential variability across all remaining work sequences within a single project.

Prioritization of tasks in a complex, large scale project must account for time-based changes in the project chain. These may include changes to material and/or resource constraints and changes to the variability of time for a step in the process. For example, the anticipated duration today for a task might be 3 weeks, but by tomorrow things may change - shop space available could be different, the relative experience of available craftspersons (resource) might change, etc. - so that the same task might have an anticipated duration of 4 weeks. The impact of this task on the anticipated duration of the project must be managed dynamically when criticality dictates the start time of that task be changed. Similarly, constraints can change with time. Both of these dynamic conditions impact the way in which CCPM works. Coupling these dynamic changes, with multi-chain resource loading, creates a vastly complicated network of scheduling and management possibilities, but it is necessary for accurate scheduling of large scale production.

Critical chain project management planning software generally uses buffers for offsetting work stream starts and for measuring the current variability risk. The results of that calculation is then used to calculate the priority of a task. The original CCPM method measures the variable risk for a task based upon the feeding buffer for any tasks not on the critical chain. The existing calculation was:

$$\textbf{Eq. 1 (Prior art)} \quad \text{Task Criticality} = (\text{Remaining Buffer Duration} + \text{Float/Gap Duration}$$
$$\text{at the Feeding Buffer}) / \text{Original Buffer Duration}.$$

This method requires feeding buffers in order to provide a prioritization signal for all tasks. Feeding buffers work well for staggering work in planning mode. The inventors have found, however, that, in large project plans, feeding buffer monitoring is a poor measure of criticality for the following reasons:

- Cannot be calculated if missing buffers
- Every task on penetrating chain has the same high priority
- Reduced buffer size in planning magnifies priority signal
- Does not allow for reduction of risk estimate during project execution
- Cannot create a negative criticality factor on a feeding chain
- Adding, removing or relinking tasks requires buffer resizing
- Feeding buffers are not supported by many project management software systems.

The present method has eliminated the use of feeding buffers in criticality calculation and instead relies only on a new parameter referred to herein as "float". Traditional CCPM practices use two schedule durations for any task:

- Highly Probably (HP) - a conservative amount of time that one would very reasonably expect a task to be completed
- Aggressive But Possible (ABP) - a shorter amount of time that would be physically possible to complete a task, but highly optimistic.

These duration estimates may be based on a multitude of potential input variables, but they all have one thing in common: they are human predictions. In most cases, they are predictions by subject matter experts in the field, sometimes very highly informed, but they are only predictions, nonetheless. This results in uncertainty, and it is this uncertainty that is the core problem when attempts are made to optimize any project management system. In all prior art methods of managing complex systems, HP and ABP durations never change in the critical chain because the systems are too complex for re-estimation to be humanly possible or relevant. The result is that all prior art processes use an open loop system. No HP or ABP feedback with lower uncertainty ever occurs. The calculation of criticality in the critical chain is always working from "known" constraints with high uncertainty.

In the methods of the present invention, HP and ABP schedules are replaced by float. Float is the difference between the amount of time available to complete a task and the amount of time needed to complete the task. Float may also be viewed as the difference between the HP duration and ABP duration at any given time. As previously noted, however, estimation of HP and ABP durations are subject to a high degree of uncertainty. The methods of the present invention remove the uncertainties in individual calculations of HP and ABP, and instead schedule tasks to an ABP standard and add a float term into the criticality calculations. Specifically, criticality is calculated by measuring the variable risk for a task against the planned and remaining float associated to it within a project. The new calculation is:

$$\text{Eq. 2} \qquad \text{Task Criticality} = \text{Remaining Total Float} / \text{Planned Total Float}.$$

Tasks have predecessors and successors that must be accomplished in order (necessity logic). Given the amount of variation in each task and its relationships, the amount of time between tasks measured using the optimistic (ABP) duration can be calculated. An algorithm is then used to determine if there is enough time on a task or series of tasks with a given amount of variation for each task. This algorithm is used to determine if there is enough time between these tasks to prevent delaying their successors and/or the project as a whole. The level of risk for variation to affect a task's successors or the project end date can be quantified and compared to other tasks. This measurement can be used to prioritize tasks based upon variability risk and the current state of the project. Work is then authorized based upon the priority list.

Significantly, the present methods allows criticality to be continually re-measured if any dependent variables are updated. In the methods of the invention, ABP may be adjusted to the right or left in time based on resource or constraint impacts. This changes the calculation of float, and therefore impacts criticality, and the resulting impact to prioritization. Additionally, links into other systems can be used to provide real-time changes in environmental factors and real-time views of progress, delays, and project changes to impact ABP without human intervention.

The result is a system that can be used to recalculate criticality and reprioritize tasks on a regular basis (e.g., daily or weekly), accounting for changes in project scope and constraints on materials and resource availability.

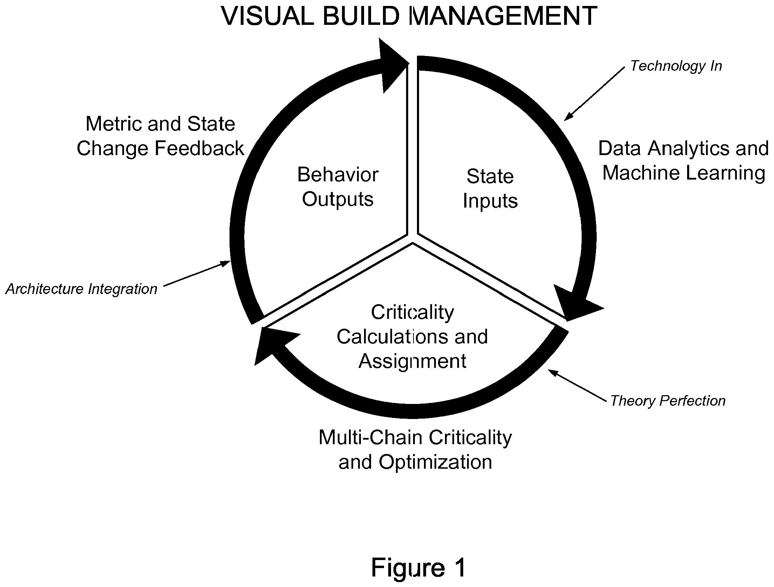

The principles of the methods of the present invention are collectively referred to herein as Visual Build Management or VBM. The system incorporating these principles is a closed loop feedback system inclusive of multiple technologies and reporting components working in concert in complex automated/semi-automated relationship architecture. For simplicity, the process can be described in three fundamental stages as shown in Figure 1. There are unique theories, unique application of technologies, and unique methods inside each of the three stages of this management process.

The state input stage involves the acquisition and use of complex sets of standards data, resource management data, enterprise resource management data, and schedule and cost information. Advanced machine learning and data analytics technologies may be applied to these data to create a state input representing a highly complex organization and array of variable tasks. The output of this stage is a critical chain project plan that encompasses a base schedule accounting for resources, materials and network logic (predecessor/successor logic across tasks).

In the criticality and task assignment stage, the criticality of the various inter-related tasks are calculated using novel and unique critical chain project management theory algorithms. This allows the tasks to be prioritized and timed to reduce overall criticality, level load resources, and convert departure impacts into dollars. The result is a task planning bill that can then be delivered to a hybrid human and machine workforce. Output from the criticality calculations may be visually depicted in an intuitive way tying to a 3D product lifecycle model system.

In the third stage, behavior output collection, the task planning bill is implemented by the work force. As tasks are executed, performance is monitored by a complex architecture of mobile computing data collection and human-based physical performance measurements and distilled into a performance scorecard. At regular intervals or as desired, performance data may be converted into a format where they can be fed back into the criticality computations in order to update the prioritization of project tasks and generate a new task planning bill.

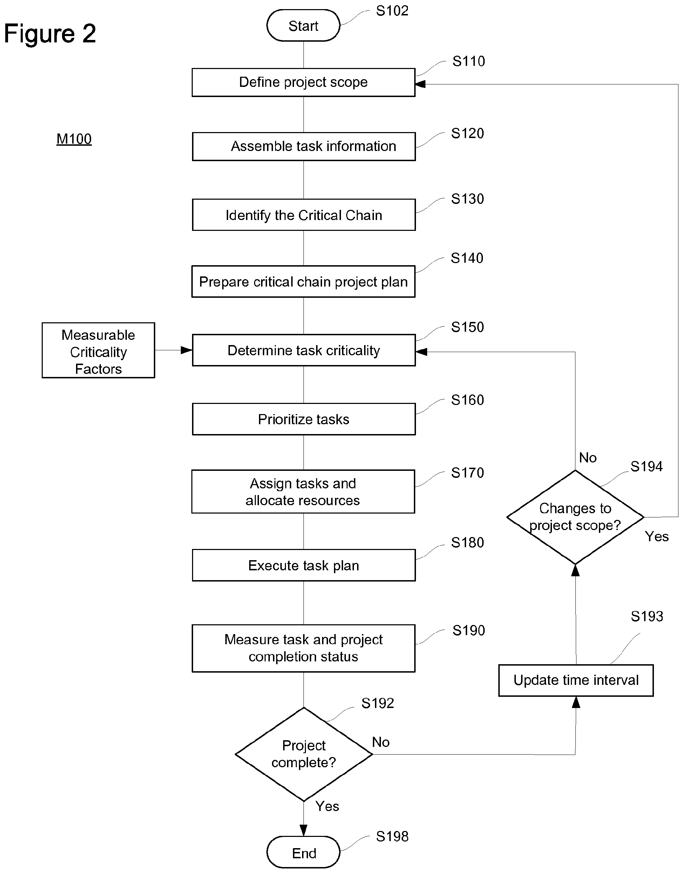

The methods of the invention will now be discussed in more detail. With reference to Figure 2, a general method M100 of prioritizing and scheduling tasks for a complex project according to an exemplary embodiment of the invention begins at S102. At S110, the scope of the project is defined. In general, the project scope is defined by the tangible deliverables desired within a finite period of time. During this stage, all requirements that must be met in order to achieve the success criteria for a project are defined and entered into a data processing system via user interface. As will be discussed, under certain circumstances, the scope of a project can change during execution. It will be understood that a project can be related to or dependent upon other projects.

At S120, a wide variety of task information is assembled by the system. Initially, this may include the determination of all the tasks that must be accomplished in order to meet the requirements of the project. Once all of the required tasks are identified, the materials (if any) needed for each task can be established and a task sequence can be determined. As used herein, the term "material" refers to any physical, consumable matter needed to complete a task. Tasks are sequenced using predecessor logic. For each task, predecessors are identified by asking "In order to begin this task, what must be completed?" Only the precedence logic of the tasks is considered at this time and resource limitations are ignored until a later process. Using this technique a logical network of tasks is constructed within project scheduling software. All tasks have at least one succeeding task except for the final task that completes or deliver the project.

With tasks structured in an ideal (or other) sequence, resource requirements may be identified for each task. As used herein, the term "resources" refers to anything required to complete a task other than time and materials. Resources may include, for example, people, tooling, and machinery. Significantly, it may also include work space. Any particular task may include multiple resources of the same or different types.

The action of assembling task information also includes the determination of the estimated durations described above, accounting for the uncertainty resulting from a wide range of variables that may be different for each task. Durations are assigned based upon the tasks to be accomplished, given the preceding work accomplished and any factors that could influence the difficulty of the tasks. As previously discussed, each task is assigned two sets of duration in order to capture the potential variability. First, an Aggressive But Possible (ABP) duration is assigned in order to capture the shortest duration possible if no variation is experienced. Second, a Highly Probable (HP) duration is assigned to capture normal variation that can occur for a task. Various statistical models may be applied for tasks that have been completed before in order to assign each type of duration.

Variables affecting uncertainty can include a multitude of potential input variables. In all prior art methods of managing complex systems, HP and ABP durations never change in the critical chain because the systems are too complex for re-estimation to be humanly possible or relevant. The result is that all prior art processes use an open loop system with no HP or ABP feedback to lower uncertainty. In such methods, the calculation of criticality in the critical chain is always working from "known" constraints with high uncertainty.

In contrast, the present method accounts for uncertainty using the concept of float, which allows input uncertainty to be driven down based on the use of rigorous standards and application of technology. Definition of the variables driving uncertainty is, accordingly, a key aspect that drives the calculation of float.

It can be seen that in a highly variable, large scale manufacturing process, there are thousands of individual calculations that affect float, the variables calculations varying by task. For example, rain, as an environmental factor, could impact the float of an outdoor painting task by 100%, but the float of a welding task by only 20%. Similarly, rain could impact the float associated with a painting task on an external structure by 100% but the float associated with the painting on a pipe system inside that structure by only 10%. The number of state equations and/or look-up schedules (collectively referred to herein as "uncertainty models") needed to calculate float across a large number of tasks is high. Description of the models for float across all the individual tasks of a complex project is beyond the scope of the present disclosure. The following paragraphs (summarized by Figure 2), however, discuss the data that may be used to construct these models for a typical ship manufacturing process.

Standards

While the application of standards can directly affect the duration of a task, it can also serve to drive down the uncertainty related to that duration. Industrial time standards can come from many sources. For an exemplary process, time standards may be built as dependencies, primarily driven by spatial constraints, but also other factors, including:

- Distance offset of the work area to nearest obstacle
- Physical access
- Overhead or down-hand welding
- Trade-specific metrics

  - e.g.: Size and length of weld
  - e.g.: Size and length of electrical cable

- Number of core steps in a process
- Certifications
- Craftsman experience (apprentice, journeyman, expert)
- Whether contracted labor or staff services

Environment

The effects of environment changes may be critical in the creation of the input state that feeds the float calculation. Some environment-related factors may be directly estimated, some may be scale factors based on environment trends, and some may be directly calculated more precisely. For example, tasks that take over 20 days to complete and are outdoors may be assigned a 20% float factor to account for the general probability that within that time period there will be 4 rainy days. The effect on the float of a shorter task, however, may be assessable based on an actual rain forecast for the time over which the shorter task is expected to be carried out. Other environmental factors that may be accounted for in addition to rain include wind (e.g., wind effects on crane operations), humidity (e.g., effects on curing time of paint and adhesives), ice and snow (e.g., effects on pace of activity), fog (e.g., effects on pace due to lack of visibility), temperature (e.g., effects on pace due to impact on workers), etc.

Macro level impacts - e.g., seasonal changes (summer or winter) - of the environment may also be considered as well as non-natural environmental impacts (e.g., indoor conditions: lighting, ventilation, humidity, etc.).

The following is a non-limiting list of some of the environmental conditions that affect the task float input state:

Cold or heat
Rain or snow
Time of day/night
Wind (crane operations)
Indoor or outdoor
Humidity
Ventilation
Macros scales - January or July - and daily forecast

Material

Material is a critical component to constraints in both traditional CCPM and the methods of the invention. Material state is used to calculate the input state as it pertains to schedule float. Material in a highly variable manufacturing setting is managed inherently differently than in high throughput manufacturing - so traditional Kanban approaches as designated in LEAN Manufacturing do not always apply. In highly variable/complex manufacturing, "material" may be a single unit component or uniquely part-numbered stock. Such items might be used only once in production of a complex system (or once in a long period of time). These types of material constraints typically carry their own warehousing and transportation concerns, unlike traditionally consumable parts in the manufacturing process - and thus they must be managed differently than usual CCPM material methods. Information on all aspects of material characteristics, availability, storage, and tracking are vital to the calculation of task uncertainty.

It will be understood that some material constraints may be handled as predecessor tasks in the critical chain, while some may be handled as feeding buffer constraints, all depending on their scale and role. Regardless, the following components may be specifically handled in the uncertainty models used for float calculations.

Consumables

Stock and part-numbered material
Asset tracking and management of units

Tools

The availability of tools and other scarce resources is another existing component of critical chain management. In highly variable construction, however, tools-particularly large scale or task-unique tools-may be required over multiple independent critical chains. Crane usage is a straightforward example: a single crane could be used on dozens of critical chain projects, and thus must be managed and assigned inherently differently than in traditional critical chain project management approaches.

Also, because highly variable construction does not necessarily rely on fixed infrastructure, the availability and reliability of temporary services - compressed air, power, welding gasses, etc. - all need to be included and considered in the uncertainty models used to calculate task float. Items to be considered may include:

Crane availability
Machines status and maintenance
Services and support (power, compressed air)

Footprint

Finally, one of the largest drivers to the float calculation in many large scale projects, and very integral to the start time calculation, is the available physical footprint. A major failing in EVMS and other project management tools that assume infinite resources, the available space to support highly variable manufacturing is a significant constraint in deciding when to start a task (criticality), as well as its available float.

For the input state used in the criticality calculation, multiple factors relative to footprint may be considered- not just the physical capacity. The personal safety margins for ingress and egress, as well as for work access need to be planned and considered. Also, the dimensions and margins for tooling, jigs, and fixtures are all taken into consideration in the creation of the input state for the criticality calculation. The following list of factors all have terms in the input state:

Physical capacity (non-labor constraints)
Personal safety margins
Tool dimensions (jigs, scaffolds, fixtures, ladders)

Physical surveys

Because footprint is so key to the float calculation, the methods of the invention may also use separate Monte-Carlo simulations in the calculation of available footprint. This may be considered as a component of uncertainty model generation, rather than a component of the criticality analysis step since it includes only one focal area of the entire input state and the result of the simulations are footprint requirements and not criticality values; however, the level of detail that is present in the calculation of footprint may exceed all other input state variables and so deserves additional mention.

Returning now to the method M100, it will be understood that the assembly of information and creation of the uncertainty models needed to calculate float for each task may be considered to be part of the action of assembling task information S110. In some embodiments, however, the uncertainty models may be separately determined and stored so as to be accessible by an automated system used to carry out the uncertainty calculations described below.

Some or all of the data required for determining the tasks needed to accomplish project requirements, materials required, task sequence logic, and resources required, and for establishing task uncertainty models may be previously stored in a data storage unit accessible by the data processing system used to assemble the information for the various tasks. Portions of the data may be obtained or accessed by the system from other sources as required.

At S130, the sequencing and resource information for the various tasks are used by an automated system to identify the critical chain for the project. The critical chain is defined as the longest sequence of tasks that prevent a project from being completed earlier when taking into account all task durations and the potential variability (uncertainty) of those task durations and taking into account resource constraints. Using the predecessor logic of the identified tasks, scheduling software can be used to quickly identify the critical chain. First, the software resolves any resource contention. If the demand quantity of a resource type exceeds the resource availability for a period of time, logical links may be created between the tasks due to the resource contention. This task relationship, called a resource link, mimics necessity logic and ensures tasks will be staggered in time. Next, the critical chain is identified by following the connection of tasks and determining the longest chain of tasks when considering ABP durations, potential variation using HP durations and resource links.

At S140, a critical chain project plan is prepared, which includes a base schedule including project and feeding buffers. These buffers, which are determined using an automated scheduling system are the key to immunizing the project from the effects of task variability. A project buffer is additional time that is placed at the end of the project to offset the variability of tasks earlier on the critical chain. Task chains that intersect the critical chain are referred to herein as "feeding chains". A feeding buffer is additional time placed between the final task of a feeding chain and the intersecting critical chain task.

Feeding buffer and project buffer sizes are dependent upon the sum of the potential variation along each chain. In traditional CCPM, the variation for each task can be accounted for using a value called "safety removed", which is calculated by subtracting the ABP duration from the HP duration. A predefined percentage of that safety removed (usually 50%) is added to the buffer. The sum of each of these values results in the size of the project or feeding buffer.

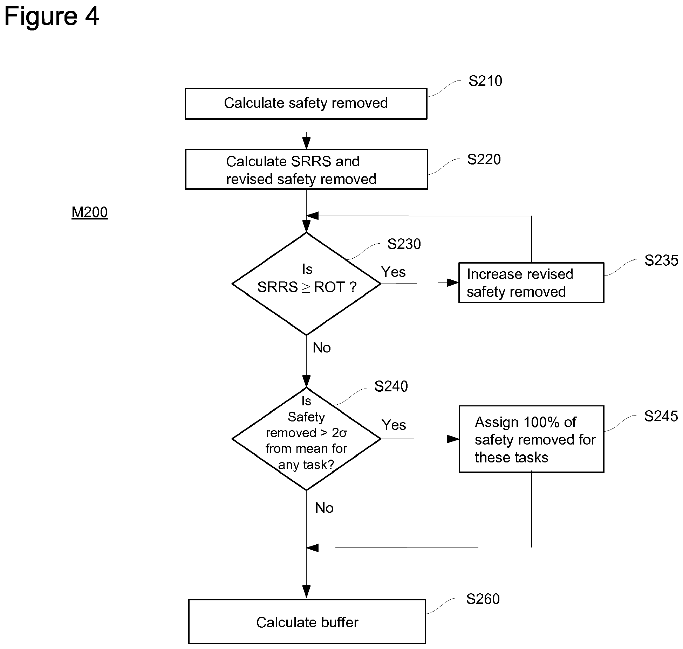

The inventors have found that significant improvement in risk immunization can be achieved using an alternative buffer calculation in which statistical analysis is used to prevent over-conservativism in the establishing the size of the buffer. This approach also allows for environmental factors to be taken into account. The result is a higher level of confidence that the project is immunized from potential risk and is more likely to deliver on time. With reference to Figure 4, a customized buffer calculation method M200 according to an embodiment of the invention begins at S210 with an initial calculation of safety removed for each task of a particular chain (which may be the critical chain). The initial safety removed for each task is HP duration minus ABP duration, as in traditional CCPM methods. Statistical analysis is then used at S220 to calculate the Square Root of the Sum of the Squares (SRSS) of the safety removed values across all tasks. Also at S220, the initial safety removed is multiplied by a "rule-of-thumb" (ROT) percentage to obtain a trial safety removed. In typical applications, the ROT is 50% of the safety removed. At S230, the trial safety removed is compared to the SRSS safety removed. If the SRSS value is greater than or equal to the trial safety removed, the trial safety removed is increased at S235. This may be accomplished, for example, by adding an additional percentage (e.g., 20%) to the trial safety removed. The result is again compared to the SRSS value. The process is repeated until the trial safety removed exceeds the SRRS value or the initial safety removed value. If the latter occurs, the trial safety removed is set equal to the initial safety removed, which is indicative of a 100% safety value. At S240, highly variable tasks are identified and assigned a 100% safety value as well. In this particular example, highly variable tasks are those with revised safety removed values that are more than 2 standard deviations from the mean for all tasks (i.e., the top 2.2% in a normal distribution). At S260, the overall buffer is determined as the sum of the revised safety removed values across all tasks in the chain. In some cases, the resulting buffer may present a higher value than desired in comparison to the duration of the chain. For example, it may be undesirable for the critical chain buffer to exceed 50% of the critical chain duration. In such cases, the automated system may present the option to the user to adjust the safety removed values for some or all of the tasks.

As a project nears completion, the calculation will apply a higher percentage of safety from the individual tasks due to the SRSS calculation steadily increasing compared to the percent of safety removed. When a project is nearly complete (1 task remaining), 100% of safety is applied as SRSS = 100% of safety at that point.

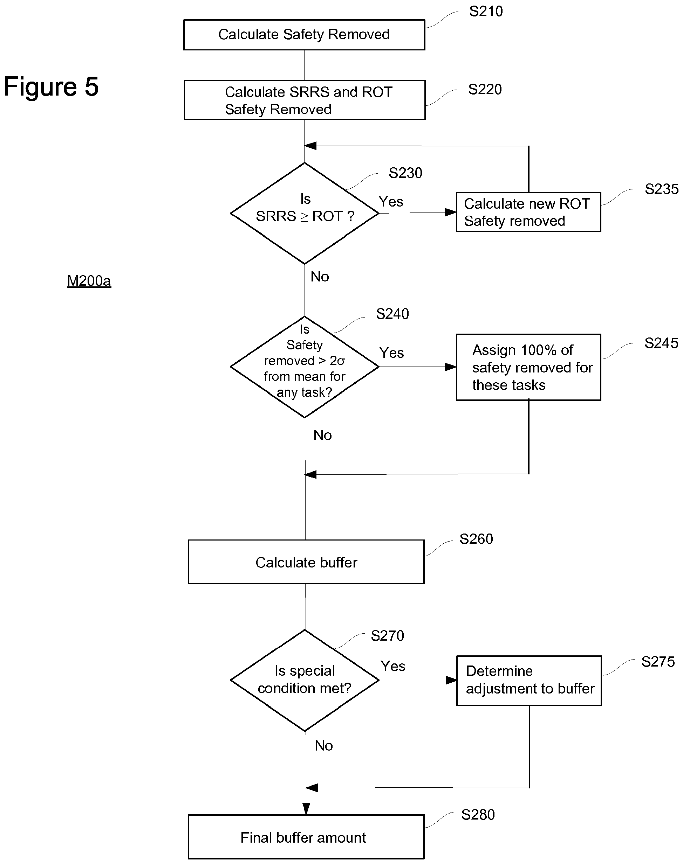

Figure 5 depicts a variation M200a of the above buffer calculation. In this variation, the buffer calculation allows for addition to the buffer amount as the result of meeting special condition criteria. This can be used to account for increased variability due to outside influences (e.g., environmental effects such as weather). In the method variation M200a, the buffer can be adjusted at S275 in response to a determination at S270 that a particular condition has been met. In a particular example, the special condition could be that some or all of the tasks in the chain are to be conducted outdoors. If this condition is met, the buffer can be adjusted appropriately (e.g., by the addition of four days for every 20 days of chain duration). Any number of such special conditions and adjustments could be included in the calculation of a final buffer amount (S280).

Returning once again to the method M100, completion of the critical chain project plan represents the end of the state input phase of the method. Using this plan and the previously discussed uncertainty models, the criticality of all tasks can be evaluated to allow prioritization and identification of an executable task plan.

At S150 of the method, an automated system is used to determine the criticality of all tasks. As previously discussed, task criticality as used in the present method is the remaining float for a task divided by the planned float. Also as previously discussed, float itself may be calculated as the difference between the amount of time tasks require for completion subtracted from the amount of time available for completion. To calculate float, first the current durations of the various tasks are measured. As used herein, current duration means the sum of completed duration (time spent to date) and remaining duration. For tasks yet to start, the current duration can be set equal to the ABP duration, because the completed duration is zero and the remaining duration is the full ABP duration. The result is the amount of time tasks will actually be worked.

Next the amount of time remaining between the start of a task and an end point is measured. For the critical chain, the end date is the scheduled completion date of the project. The amount of time from the start of the first task in a series and completion of the final task are found. The amount of time available to work between this start point and the endpoint is determined. The uncertainty models can then be used to reduce the amount of time available based on current information on measurable (and typically uncontrollable) factors that can affect the uncertainty associated with a task. Such factors can include, for example, environmental conditions and changes to resource or material availability. In this way, task and resource constraints are accounted for. One simple example relating to a resource constraint would be if a task can only be worked (or a particular resource is only available) on weekdays. Under such circumstances, Saturday and Sunday would not be counted as days available for that task to be worked. This reduces the overall amount of time available.

Float can now be calculated by subtracting the amount of time needed for tasks to be worked from the amount of time available for those tasks to be worked in. If the result is a negative value, the task is said to have negative float and indicates the task (and, if the task is part of the critical chain, likely the project) will be late to deliver.

In determining the float required for the critical chain, the approach is to begin with the last task before the project buffer and work backwards. For each task, the cumulative safety required is the current task safety required plus the cumulative safety required for all successive tasks. A similar approach can be used for calculating the float for a feeding path. For each task, the task float required is then added to the maximum float required for each successor chain's float required.

Using the above methods, the criticality of every task can be determined. At S160, tasks are given an order for assignment (prioritized) based upon their in-process status, available start date, and the task criticality assigned. Work underway but not completed is classified as in-process and given the highest priority. The available start date is based upon whether all predecessors for a task have been completed and necessary work inputs, including any material, tools or resources will be available. Based upon the prioritization of tasks, a task plan is assembled and tasks are assigned to resources at S170.

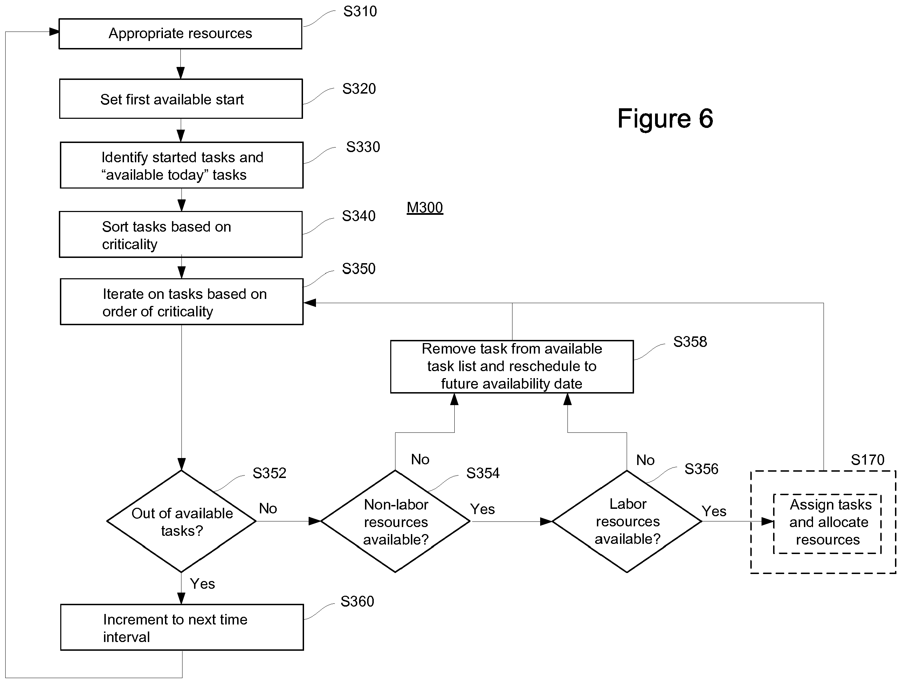

In a particular embodiment, task assignment may be accomplished according to the scheduling method M300 illustrated in Figure 6. With project tasks having been prioritized, scheduling may begin at S310 with establishing available resources necessary for tasks in the chain. At S320, the first available start for each task is identified and at S330, those tasks already started and those otherwise "available today" (i.e., workable in the upcoming time interval) are identified to create an available task list. In this context, a task is generally "available" if its predecessor tasks are complete. The available tasks are sorted based on criticality at S340. At S350, an iteration through the available tasks is initiated based on their criticality order. At S352, a determination is made whether all identified available tasks have been scheduled. If the answer is "yes", the time interval is updated at S360, and the method returns to S310. If not out of available tasks, determinations are made as to whether non-labor resources are available (S354) and whether labor resources are available (S356) for the next task in the priority sequence. If the answer to both is "yes", orders are issued to allocate resources and begin work on the task (S170). The method then loops back to S350 to select the next task in the priority list. If the answer to either of the resource queries S354, S356 is "no", the task is removed from the available task list at S358 and the task is rescheduled to a future availability date. The method then loops back to S350..

Prioritization and assignment of tasks represents the end of the second phase of the VBM planning methodology. The third phase begins at S180 with execution of the task plan. Work orders are issued and tasks are initiated and worked as prioritized. Manpower and other resources are focused on their assigned task without deviation so as to minimize the total duration of the task.

At S190, the statuses of the various tasks are determined. This action may be taken at the end of a particular time interval such as a day, week or month and includes gathering information from worker or supervisor level about the progress on the task or tasks worked on during that time interval. The information gathered may include when a task started, the anticipated remaining duration to complete the task (forecast), and if and when the task was actually completed (or when the task was stopped and may continue again). This data can be used to provide the system with a current state of all work. As will be discussed, task status may be determined based on input from work cell personnel or managers, which is entered into a metric assembly processing system. In some instances, task status may be determined, at least in part, based on automated measurement of task output parameters. For some tasks, such measurement could be accomplished by sensors sending signals directly into the metric assembly processing system. In some cases, task status measurement may be accomplished through automated assessment of camera images. In all cases, task status measurements are fed back into the system for use in redetermining task criticality.

At S192, a determination is made as to whether the project is complete (i.e., whether all tasks have been completed). If no tasks remain, the method ends at S198. If there are tasks remaining to be completed, the time interval is updated at S193. The method then returns to S150 and task criticality is redetermined for the updated time interval based on the task status information gathered at S190 and any changes to uncontrollable factors (e.g., environmental condition for the upcoming interval).

Under some circumstances, a determination may be made at S194 as to whether a change must be made to the scope of the project (e.g., due to a change in deliverable requirements). If changes in scope are required, the method returns to S110.

The actions from S150 to S190 may be repeated as needed until completion of the project. It will be understood that the time interval over which these actions are carried out may vary during the course of the project and that any regular or irregular time interval can be used. Because relative task criticality can change during every time interval (e.g., daily) based on progress (monitored output) as well as constraints and updated environmental factors (input), work can be re-planned at the beginning of every time interval (e.g., every day) throughout the duration of the project. This is a major technical improvement to existing scheduling systems that drive performance to meet a predetermined schedule regardless of available resources or constraints. It is this key piece of feedback that is used to prioritize tasks to best utilize available resources.

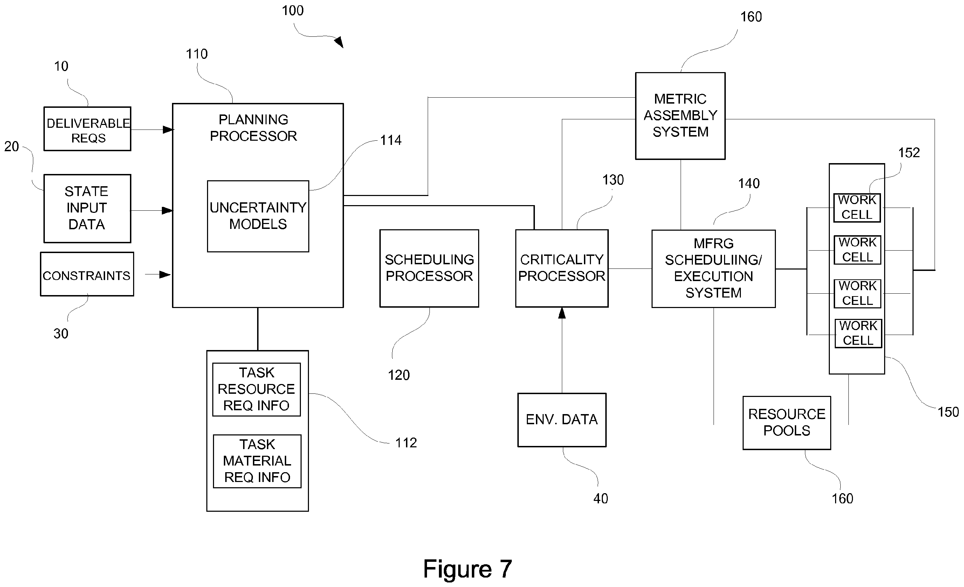

The methods of the invention may be implemented using a combination of automated processing and sensor systems and human interaction. With reference to Figure 7, an exemplary project management system 100 for implementation of project management methods according to embodiments of the invention includes a planning processor 110 configured for receiving information on deliverable requirements 10 and for receiving or retrieving state input data 20 from one or more data sources. The planning processor 110 may also be configured for receiving constraints relating to resources and materials. The planning processor 110 is an automated data processing system programmed or otherwise configured for determining the tasks needed to achieve the deliverable requirements for a project. The planning processor 110 is in communication with a data storage module 112 or other data source in which task resource and task material requirement information are stored. The planning processor 110 is programmed or otherwise configured for using this information to establish material, resource, and sequencing requirements and task uncertainty models 114 for the required tasks.

The project management system 100 further includes a scheduling processor 120 in communication with the planning processor 110 and a criticality processor 130. The scheduling processor 120 is an automated data processing system configured for receiving task information from the planning processor 110 and using it to establish a base project schedule including a critical chain for the project and project and feeding buffers. The scheduling processor 120 may make use of off-the-shelf or customized scheduling software. It may, in particular, be configured or programmed to carry out the methods M200, M200a illustrated in Figures 4 and 5. The criticality processor 130 is an automated data processor configured to receive task scheduling information from the scheduling processor 120 and perform criticality calculations according to the methods of the invention. These calculations are based, at least in part, on measured and forecast environmental data 40 received from multiple sources. The criticality processor 130 also receives feedback information from a metric assembly system 160. The criticality processor 130 is programmed or otherwise configured to use the environmental and feedback data and the project task variability models to determine the criticality of and prioritize the various project tasks. The criticality processor 130 may, in particular, be programmed or otherwise configured to carry out the method M100 to prioritize the project tasks for a predetermined time interval or for the remaining duration of the project.

The management system 100 further includes a manufacturing scheduling/execution processor (MSP) 140 that is configured to receive task prioritization information from the criticality processor 130 and use it to assign resources and materials to accomplish the tasks according to the priority established by the criticality processor 130. The MSP 140 may make use of off-the-shelf or custom scheduling software. The MSP 140 may, in particular, be programmed to carry out the method M300 of Figure 6. The MSP is configured to communicate task work orders to specific work cells 152 within the manufacturing facility 150 and to resource pools 160. Resources are then employed within the work cells 152 to accomplish the assigned tasks. The metric assembly system 160 comprises an automated data processing system configured to receive feedback information from the work cells 152 regarding the status of completion of the tasks assigned to the work cells 152. The metric assembly system 160 may also include sensors or other mechanisms (e.g., cameras) for automatically measuring task-associated parameters. Such parameters may allow automated, quantitative measures of task completion status or other task-related information.

It will be understood that the data processing systems of the management system 100 may each be in the form of a computer or computer system. The term "computer system" or "operating system" is to be understood to include at least one processor utilizing a memory or memories. The computer memory stores at least portions of an executable program code at one time or another during operation of the processor. In addition, the processor executes various instructions included in that executable program code. An executable program code means a program in machine language or other language that is able to run in a particular computer system environment to perform a particular task. The executable program code process data in response to commands by a user. As used herein, the terms "executable program code" and "software" are substantially equivalent.

It should also be appreciated that to practice the systems and methods of the invention, it is not necessary that the processor, or portions of the processor, and/or the memory, or portions of the memory be physically located in the same place or co-located with the instrumented body. Each of the processor and the memory may be located in geographically distinct locations and connected so as to communicate in any suitable manner, such as over a wireless communication path, for example. Each of the processor and/or the memory may also be composed of different physical pieces of equipment. It is not necessary that the processor be one single piece of equipment in one location and that the memory be another single piece of equipment in another location. The processor may be two pieces of equipment in two different physical locations connected in any suitable manner. Additionally, each respective portion of the memory described above may include two or more portions of memory in two or more physical locations, including or utilizing memory stores from the Internet, an Intranet, an Extranet, a LAN, a WAN or some other source or over some other network, as may be necessary or desired.

Software enables the data processing systems to perform the operations required by the methods of the invention and may be supplied on any of a wide variety of data holding media. The implementation and operation of the invention may be in the form of computer code written in any suitable programming language, which provide instructions to the computer. It should further be appreciated that the software code or programming language that is used in the data processing system may be provided in any of a wide variety of forms. Illustratively, the software may be provided in the form of machine language, assembly code, object code, source language, flash application or other program that is interpreted by a user's browser, as well as in other forms. The software may be in the form of compressed or encrypted data utilizing a known compression format or encryption algorithm.

It should also be appreciated that the particular software medium used by the data processing systems may take on any of a variety of physical forms. Illustratively, the medium may be in the form of a compact disk, a DVD, an integrated circuit, a hard disk, a floppy diskette, a magnetic tape, a RAM, a ROM, or a remote transmission, as well as any other medium or source of information that may be read by a computer or other operating system. Accordingly, the software used in operation of the data processing system may be provided in the form of a hard disk or be transmitted in some form using a wireless network, the Internet, an Intranet, or a satellite transmission, for example. Further, the programming language enabling the system and methods of the invention as described above may be used on all of the foregoing and any other medium by which software or executable program code, such as a flash application, may be communicated to and utilized by a computer or other operating system.

Task Status Information

Feedback information from the metric assembly system 160 allows the float of every task to be recalculated as long as it is work in progress WIP. This calculation is not done by physical progressing - an earned value step - but rather by re-calculating float using the existing state. The remaining ("existing") float and the newly "required" float calculation are then reviewed algorithmically to obtain a percentage of float consumed. It may be greater than 100%, though usually not. The calculated percentage is applied to the original float plan in days, and criticality re-calculated.

Task status information may be or include other metrics that can be used to evaluate the efficiency of the work cells 152 and their managers. Traditional Earned Value Management looks at the physical progress of a scheduled task, reported in percentage, and then compares that progress to the planned budget and schedule to determine a set of performance indices. This relatively subjective report of physical progress only provides the program manager with a status report. It does not provide the foreman with reliable and objective data on what should be worked for best value. Using this approach, the jobsite foreman may be pressured into driving his cost and schedule performance indices to a value of 1.00, even when those actions aren't the best use of the company's resources. It also can result in bad behavior relative to the reporting of the physical progress variable - a subjective term in the equation.

In a particular embodiment of the present invention, an approach is taken that is fundamentally different from EVMS physical progressing of the work, and includes steps and data not used in traditional CCPM. This approach ignores the calculation of progress during daily work assignment and instead focuses on more tangible and objective metrics. According to this method, the foreman is provided with a scorecard that is not a subjective assessment of task completion, but rather is a compiled report of what the foreman is doing with the resources available to him. The parameters provided may include:

- Compliance to priority list (Task Execution Priorities)
- Overtime used
- % of HP Time consumed
- Report on stalled work
- Turnover time report
- Amount of work-in-progress (WIP) for work cell

  ◦ Departures from norm
  ◦ Degree of multi-tasking

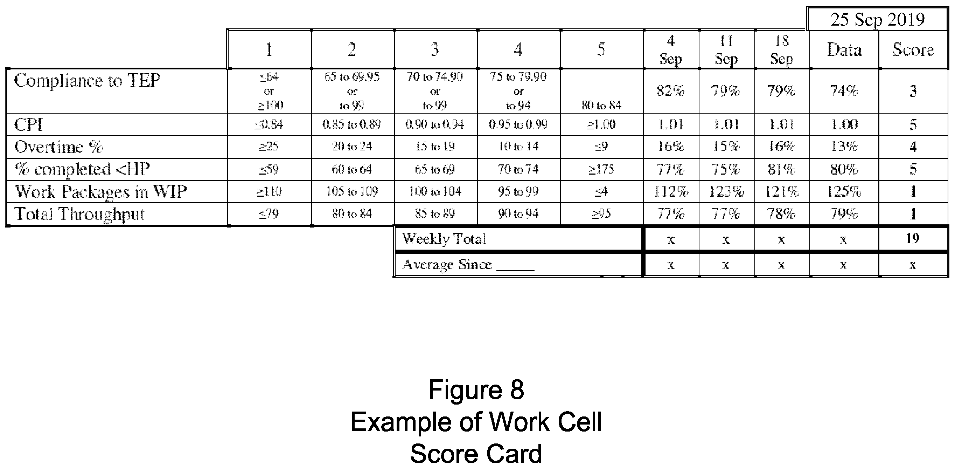

These terms are all indications of a foreman's ability to work the critical tasks. An exemplary scorecard using several of these parameters is shown in Figure 8. This scorecard can be used to address the criticality of a set of tasks, as well as to measure the foreman's performance. Tasks that are far along in the percentage of HP schedule use will receive higher and higher criticality until they are done and no longer tracked. Resources being applied to non-critical tasks are likewise reported, and the data is fed back into the system. The result will be that the criticality of those tasks will fall further. This approach has the very desirous result of focusing resources on the most critical tasks and driving schedule completion based on the multi-chain criticality scores. Since the input deck loads multiple factors - crane usage, material, weather, etc. - into the criticality calculation, the complexity of the decisions are reduced to human-manageable levels (focus on critical tasks) and the bottlenecks (crane usage, material, weather, etc.) no longer appear as daily crises. The inter-connectivity of the system is accounted for, and the system delivers high value work planning, and not merely status reporting.

As objectively as the system is built, humans still operate it. There are undeniable, human performance impacts to production when people are re-assigned from task to task on a daily basis - even if VBM tells us to do it. Accordingly, a check point may be included in the output/feedback action to ensure that the engagement of workers is actually maximized.

In this check, a short duration (days) forecast for overall expected criticality is reviewed assuming no unplanned events have happened between now and the selected forecast date. When criticality scores are effectively the same, but numerically differentiable between two tasks, smarter decisions can be made that affect long term reductions in unplanned events, resource loss, etc. by avoiding the "whack a mole" mentality on the production line. Simple algorithms are currently used to produce this forecast, but as the available training data set grows with use and time, machine learning technology has been implemented to further stabilize assignments that have positive human performance impacts.

An additional aspect of an exemplary embodiment according to the invention provides a method for leveling resources across multiple projects. In traditional CCPM, project resources are leveled considering all available resources and then synchronized based on some sort of synchronizing resource or activity. In the methods of the present invention, this is not practical as there would be a much higher number of resources than could practically work on a unit due to the fact that the same resource skill (e.g., welding) may be required across hundreds of parallel projects.

Instead, resource leveling is initially planned and calculated based on a reduced set of resource availabilities that is more practical for an individual project plan. The plans are then implemented into tracking, and leveling across the entire resource pool can be performed across all projects.

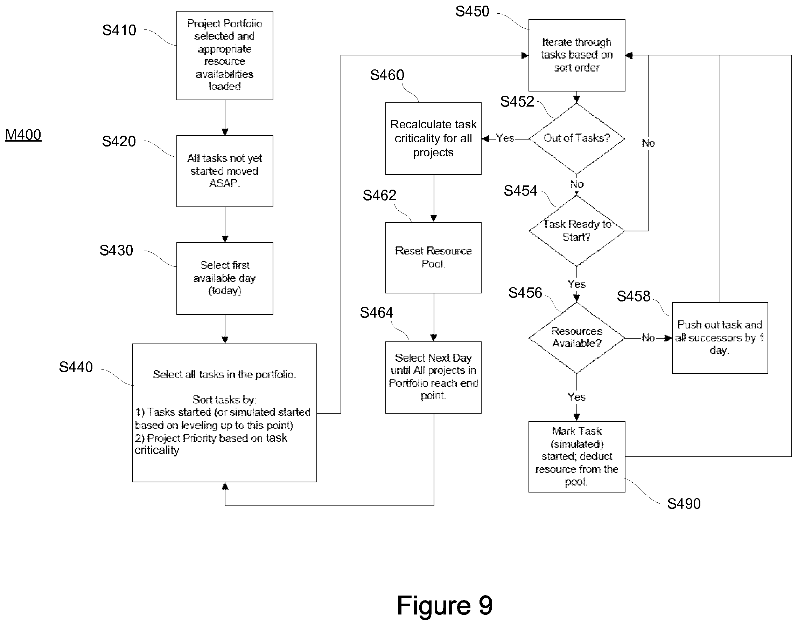

With reference to Figure 9, a method of multi-project leveling M400 may be used in embodiments of the invention. In the method M400, once a project is selected and available resources loaded at S410, the approach is to move all tasks not yet started as soon as possible at S420, removing delays previously added in the initial leveling algorithms. Starting at the earliest day possible time interval (today) at S430, the tasks are resorted according to whether or not the task has started, and then based on project priority (task criticality) at S440. An iteration loop begins at S450 which cycles through the tasks with queries as to readiness to start (S454) and availability of resources (S454). If a task is scheduled to start and resources are available based on the global pool, then the task is set to start and the resource is deducted from the pool at S490. If a task is scheduled to start and no resource is available, then the task is delayed to the next day at S458.

Upon determination that all tasks have been reviewed at S452, the leveling method M400 then recalculates task criticality for all projects (S460), resets the resource pool (S462) and cycles to the next day at S464. The task criticality recalculation takes into account the previous day's delays. Tasks can then be re-prioritized and scheduled based on resource availability with the new prioritization sort: first tasks that have already started and then based on task criticality.

This day-at-a-time reprioritization and leveling continues until all projects have been leveled through their projected completions.

All of these calculations as well as historical tracking of the project itself, excessive durations/missed handoffs and reasons therein, buffer recovery plan creation, and general views into tasks available to specific areas/foremen are managed and handled via a customized application, which allows quick and easy access to the calculations and data.

Display and Communication of Planning Information

The inventors have found that for front line production decision making, existing tools are lacking in the way they convey information. Actionable information is difficult to discern, and does not leverage modern 3D PLM (product lifecycle model) infrastructure. Furthermore, in existing systems, criticality is calculated from constraints and histograms with a non-dimensional score, but that does not convey the reality of the urgency to level load or address resource constraints. The methods of the present invention and, in particular, the ability to reprioritize criticality provides for significant improvement in both the information that can be provided to users and the form in which it can be presented.

Traditionally, CCPM schedule information is provided in the form of Gantt charts, CCPM burn-down charts, and other tabular formats with text descriptors and criticality scores. Understanding and making decisions on this material requires training and experience, and is not particularly engaging to technology-savvy workers or digital natives.

Modern PLM systems, and visual work instructions systems, regularly use 3D geometric data to convey step-by-step instructions, and dramatic cost reductions are typically seen over reliance on their paper based alternatives. Step-by-step performance systems, like SAP's Visual Enterprise (VE), can be used to simulate gross work sequence information visually using 3D data by "faking" the step-by-step tools into thinking sequenced work on a large task is actually made up of the discrete steps of a single task. However, this approach is not the intended purpose of the software, and so it falls short in many ways.

The VBM software used to implement the methods of the invention does things that sequential digital storyboarding software does not. First, it allows for multiple chains to be shown on the screen simultaneously - something step-by-step software would never conceive. The user is able to see multiple tasks in multiple chains simultaneously, and the user can break the dependency on predecessor to successor relationships that this software would typically depend. Secondly, it can act not only as an output tool as VE or equivalent does, but also allow for input -something step-by-step software would never conceive. In other words, the software allows the shop foreman to play "what-if' visually and move sequenced work depicted as 3D geometry with a "click and drag" and dynamically assess the impact on the critical chain. This would also allow Engineering & Design and Production Planning groups to assess impacts of design changes to production schedules. Lastly, the Foreman will be able to more intuitively track and forecast physical progress - still needed for EVMS reporting to the government - which would feed back into the business management modules of the ERP system to earn value on work performed and easily document variations from both baseline cost and baseline schedule. Because VE and similar tools assume sequence dependency, this is a capability they would never attempt to provide. Next, if the 3D geometry is tied to a mobile system that can deliver an augmented reality (AR) overlay of the expected part on the physical status - he can perform his physical progressing on that 3D tablet using AR as the interface - something a 2D GANTT chart could never enable. Finally, by connecting the VBM tool to the planning infrastructure, as opposed to the ERP or PLM infrastructure as VE bridges, it is possible to update the work plan in real time - live updates - based on plant conditions, material hold-ups, resource issues, or other constraints in the critical chain. This is something that PLM and ERP systems can't provide.

Communication between people is also a critical part to VBM. Traditionally, engineering or planning personnel communicate to the skilled craftsman using drawings and operational task lines (oplines). Traditionally, CCPM tools report project status from the craftsman to the project manager using a buffer burn-down diagram (see, e.g., U.S. Patent 6,501,473). Like many of its project management predecessors (e.g., EVMS using CPI/SPI charts), this is a project status reporting tool, not a work planning or scheduling tool.

Modem design and manufacturing, particularly in highly variable manufacturing, rely on CAD tools to depict complex, unique 3D products. By combining the work planning tool, with the CAD visualizations, highly intuitive gross instructions can be communicated from the engineer/designer to a skilled craftsman - through the planning channel. Likewise, project status can be reported from the craftsman to the project manager also through 3D tools, coupled with project metrics.

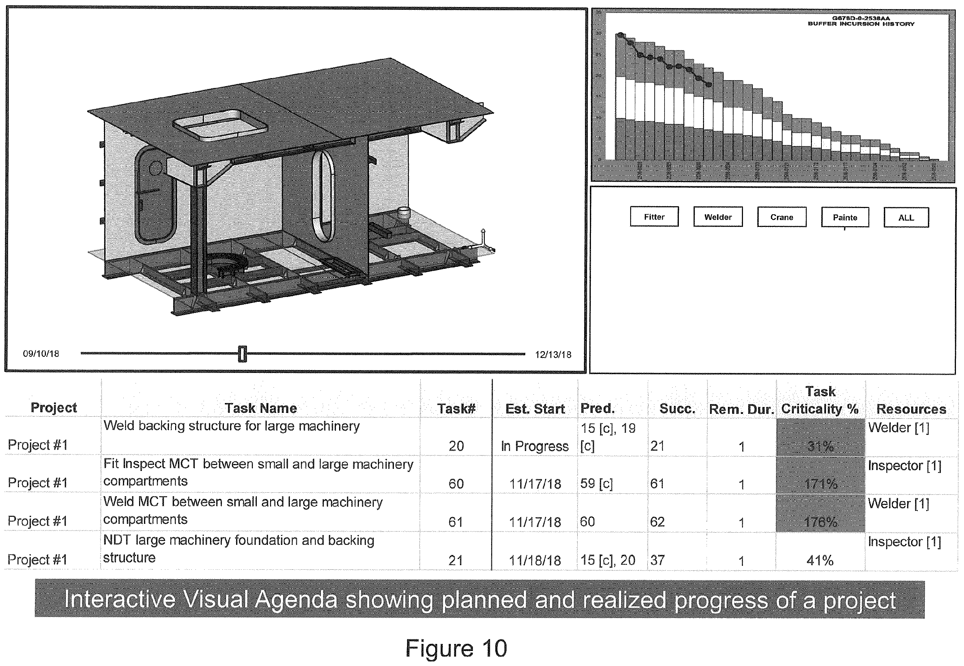

The methods of the present invention encompass such an approach. An operational VBM dashboard (similar to that shown in Figure 10) allows a user to view the project burndown, CCPM scorecard, and 3D representation of the critical chains under a single project. This dashboard also allows the user to use a scroll bar to slide forward in time so that the construction foreman can monitor and manage the health of his critical chain project as work is started and completed. There is an additional interface feature that allows a user to scroll over the multiple chains NOT associated with a project, but that tie into resources and other operational constraints (footprint, etc.) so a foreman or manager can understand where bottlenecks appear that affect his decision making.

This interface additionally provides direct connections to work being accomplished through augmented reality - where the planned start of an object or work component can be digitally overlaid on the physical object through a camera feed of the real object on a tablet or by a digital overlay on an optically see-through head-mounted display. Lastly, this visual communication method also gives a user access to machine states through display of Internet of Things data - to include maintenance needs and machine performance (predictive analytics), and also safety information.

Alternative Criticality Calculations

As discussed above, the methods of the invention compute task criticality as a risk score that compares the amount of time available to complete work compared to the potential time it could take to do the work when considering normal variation. This is an adequate method when comparing work within a single project or projects of similar size. Projects in many industries (shipbuilding, for example) can vary considerably in magnitude and duration. This can cause work sequences in projects of non-similar magnitude to have similar task criticality values. Using a ratio as a schedule risk and prioritization signal may not be adequate in an industrial multi-project environment. Instead the system may create a prioritization signal with multiple levels of risk and time interval until a threshold between levels is crossed. Rather than displaying that a task has 80% of the safety required for the potential variation, the system may state that the task is "green" and has 4 days until it becomes a "yellow" task. With a schedule risk being converted to a standard unit, risks across projects can be compared with a normalized score.

Cost Basis

In industrial environments, projects vary in their costs incurred and value delivered. Throughput can be measured in units of different varieties. Throughput can also be measured by the amount of value being produced through the systems. By using a normalized priority units, cost and value can be used to compare and prioritize activities based upon the financial impacts they can have to the entire system. In effect, a "dollar days" unit can be used to throttle activities through the global system, allowing financial effects to be immediately felt upon activities worked.

Modem CCPM theory does not touch the issue of cost. It only assumes that the best possible throughput equates to the highest revenue for production. For dramatically complex construction projects, where a measurable component of the production culture is driven on "favors" for co-workers finding themselves in schedule binds, there is no present method or tool to correlate the present critical chain solution to cost.

This lack of cost visibility can manifest itself in many negative ways. For example, an optimum macro solution may have a particular group in a standby mode for a day to keep footprint clear; where at a micro level - it appears to be waste by that group. To counter the appearance of waste, possible work is selected and started out of sequence to level load resources (and satisfy management and regulators) that is probably on a non-critical task, and could create cascading constraints in the critical chain that actually are detrimental to overall production.

Heretofore, those detriments can be reported as changes to the criticality score of a particular task or set of tasks. Changing a criticality score in a critical chain project plan, however, typically does not have the desired management (or regulatory) impact to eliminate poor behavior on the manufacturing floor. A means to connect that change in criticality score into financial terms (dollars) is the best way to explain to management the impact that certain decisions have on the bottom line. Prior to the present invention, no means to accomplish this conversion exists in any method or tool today.

The inventors have found that a system that can dynamically assess changes to the critical chain can also be used to calculate the impact to resources (labor, etc.) of those changes. Using rate tables and service and support histograms versus schedule, it is possible to equate the change in criticality score and overall facility impact and schedule delay into a financial term - dollars - so that managers and foremen can make informed decisions on any possible departure from the critical chain plan. "Do this step out of sequence, and it will cost the program $XXX,XXX" - will produce different decisions and results than: "Do this step out of sequence, and it will increase the criticality of step 4 by X.XX%".

Not only does this aspect of the invention help impact culture on the production line, it can be used to evaluate, quantitatively, business operation decisions such as when to approve/deny/seek overtime, and when to prioritize one set of project chains over another to meet a possible schedule incentive bonus (or if it isn't worth it).

Multiple Projects

Work priorities within a project can be handled by many software applications. The logical relationships, resources requirements and required schedules allow critical activities to be understood to varying levels. What becomes difficult is understanding the importance of activities and their effects upon other projects and the entire system. Humans alone have poorly attempted to connect and quantify these impacts when hundreds and thousands of projects interact with each other. Without a series of algorithms and decision making systems, a resource may be assigned to an activity that would cause harm to the entire system. A global task criticality can be created by an all-knowing system that understand the complexity of all relationships, constraints and deliverables within the system. An activity that has a low priority when looking within a single projects could be the most important activity to be completed due to a series of resource constraints and cascading effects if not completed in the near future. The opposite may true as well. An activity thought to be critical to a single project may be the lowest level priority because the project completion is not affecting anything else in the system. This would allow the resources to be applied to more critical work to better the delivery throughout of the entire system.

Configurable Threshold)

The ability to throttle projects as a whole is critical to a multi-project environment. A project may be more or less important to complete in the near term due to being on the critical path of the system or for other external factors. The priority system is based upon standard threshold for critical versus non-critical activities. By making this threshold variable, sector of the system can be sped up or slowed down depending upon the system's desired effect.

Resources/Capacity

In a dynamic multi-project environment, it is impossible to predict when each resource will be required to be available. A maximum amount of resources can be quantified, but it is unreasonable for the system to maintain the maximum quantity of a resource given the amount of unused capacity that would result. Instead, it is desired that the system adapt to the minimal amount of resources required to deliver projects within schedule boundaries and prioritize the work activities accordingly. The system is able to see the over and under allocations of resources and throttle the work priority signal appropriately. An example of this can be found in crane capacity. There is a finite amount of lifting events that can occur given the scarcity of cranes. An activity within a project can have a low priority because there is a large amount of time before the work must be done and has an impact on the project. However, the system is predicting a high demand for a crane when this activity would likely be tasked. In order to avoid this resource conflict, the system adjusts the priority for the activity to be worked in a lower demand period. By adjusting the priority signal for activities, the system has optimized its resource usage, minimized is capacity requirements and lowered the potential risks to project deliveries.

Constraint Dates

Traditional planning methods create a targeted single end point deliverable. A desired delivery date is defined and work is sequenced in the manner to best support the final objective. In a large industrial setting, this may not be adequate due to multiple objectives or milestones within the project timeline. If a project is planned for a duration of several years, key dates within may be drivers to value creation, incentives or penalties. The system can be made aware of these key dates and optimize work to meet the intermediary objectives without adversely affecting the global results.

Process Variance

Work sequences can vary if conditions are or are not met and the system can adapt to optimize the outcome locally or globally. For example, the final desired result of a series of activities is to have a topcoat of paint applied to a metallic surface. If the surface is prepared for paint, there is a limited time that paint must be applied. If that time is exceeded, additional surface preparations must occur. The project plan can be created with two potential pathways to completion with only one being fulfilled. The system is aware of these constraints to the ideal sequence and will adjust the prioritization in order to minimize any additional work if this is the best solution for global optimization. When combined with resource constraints and global outlook, the system may decide to prevent starting the surface preparation or to forgo the ideal sequence and add the additional steps.

Simple Rank

All of the inputs and methods to optimize work sequences and project deliverables are prioritized in a manner to provide resource managers with a simple sequence and hierarchy of work priorities. The manager can know with confidence they are working the correct tasks or just as important, are not working the incorrect tasks. This allows traditional methods of personal throughput to be retired and compliance to the system to drive tasking. The global system is more stable as recommended priorities are followed, which in turn limits future variability within the system. The system moves closer to absolute optimization and throughput is increased.

Optimization

Modem CCPM theory states that production cannot be optimized because the uncertainty that drives the feeding buffers inherent in the theory cannot be predicted with enough accuracy to determine the best course of action necessary to optimize. The inventors have concluded that this is an inherently human-driven issue (i.e., it is not humanly possible to understand that uncertainty). Modern machine learning technologies change this assumption. Today, machine learning (data analytics, artificial intelligence) is used for predictive maintenance and down-time impact prediction of machines in manufacturing. However, these same technologies can be used to understand the complex workings of people as well as machines - provided the data is available to analyze. The inventors have found that machine learning technology can be used on process estimates to more accurately predict the uncertainty of production constraints, and in so doing, have solved the fundamental issue holding back the ability to use CCPM to optimize plant production.

When combined with the ability to continually revise task criticality calculations based on changes to resource constraints and actual performance feedback, machine learning makes it possible to optimize plant production without the need to calculate all of the permutations to find the optimum. The processing system is simply trained to select the optimum directly from the known variables without calculating all of the possibilities.

Application of machine learning technology has become commonplace. PLC controllers and countless other sensors embedded in complex machines provide data that can be aggregated and used by data analytic engines to predict future performance of those machines. Some social engineering (advertising) firms and government agencies are now applying those same tools to human data with amazing results to deliver targeted advertising or find terrorists within a population. However, such algorithms have not been applied to industrial man-power performance, with the results being fed back into a CCPM uncertainty calculation to optimize high variability manufacturing. The inventors have found that this can be done to counter the assumption that uncertainty in human systems is unpredictable, and that optimized manufacturing solutions cannot be calculated. By using machine learning algorithms on past performance metrics, optimized critical chain plans can be created. This would be considered "Skill-Risk" optimization, and would be a two-step process: first, a training data set is created (labor resource histogram); and second, machine learning optimizations are applied to real time inputs of data.

This approach can also be applied to the machines themselves (machine availability histogram) which could be the same machine learning data that is used for predictive analytics (preventative maintenance) - but taken a step further. Tie the action -- preventative maintenance for example -- to the product schedule and not just the machine state. In other words, maybe a machine doesn't quite need maintenance today, but it isn't driving criticality now either - whereas if the user waits for the machine to indicate maintenance (emerging, preventative, or otherwise) regardless of plant production schedule and critical chain needs, the user is sub-optimizing the performance of the machine, not the production system. This is also a unique concept and implementation that is reliant on the various aspects of the invention discussed above.

This same approach can be applied to a system, especially for system test and quality assurance activities. Some production issues may require a system to be offline, while testing issues may require the opposite. When these needs are in conflict, there is constraint, and thus, opportunity to not only minimize constraint, but optimize it. This can happen in construction as well: a system assembly is required to meet a delivery deadline that can drive out of sequence (earlier) work or stall other activities in adjacent chains when considering them from a single project perspective. There may be better times than others or different sequences to achieve an optimum for the system based on these needs. Creation of a material status resource histogram that can be used as training data for a system-risk prioritization algorithm would complete the set of data (along with labor and machine statuses) that could enable such an optimization. In fact, all optimization routines (labor, machines, and systems) would work better using labor, machine, and material data sets.

It will be readily understood by those persons skilled in the art that the present invention is susceptible to broad utility and application. Many embodiments and adaptations of the present invention other than those herein described, as well as many variations, modifications and equivalent arrangements, will be apparent from or reasonably suggested by the present invention and foregoing description thereof, without departing from the substance or scope of the invention.

**Claims**

1. A method for prioritizing and scheduling project tasks, the method comprising:

receiving, by a data processing system, required deliverable information defining a project scope comprising a plurality of completion requirements;
determining, by the data processing system, a project task set comprising a plurality of tasks necessary to accomplish the project scope;
determining, by the data processing system for each task in the project task set,

materials required to complete the given task,
task precedence logic identifying the tasks of the task set that must be completed before the given task, and
a task uncertainty model;

preparing, by the data processing system a task sequence for the project task set;
determining, by the data processing system for each task in the project task set, a set of one or more resources required to complete the given task;
receiving, by the data processing system, resource constraint information associated with the resources required for the tasks in the project task set;
identifying, by the data processing system a critical task chain for the project task set, the critical task chain being determined at least in part based on the task sequence and the resource constraint information;
preparing, by the data processing system, an estimated project schedule comprising the tasks in the critical chain and one or more feeder task chains, the action of preparing an estimated project schedule including

calculating and adding to the critical task chain of the project schedule a project buffer;

at the beginning of a current project time interval, carrying out by the data processing system a set of task criticality and scheduling actions including

receiving current criticality factor information on one or more variable criticality factors associated with one or more of the project tasks,
calculating a task criticality for each task of the project task set using the task uncertainty model for the given task, the current criticality factor information, and task status information for tasks for which work has previously been initiated,
prioritizing the project tasks based at least in part on task criticality, identifying project tasks for which work should be done during the current time interval and assigning each said task as a current work interval task to a work cell, and
transmitting a work request for each current work interval task to a work cell receiving station associated with the work cell to which said current work interval task is assigned;

at the end of the current time interval, carrying out a set of task status assessment actions including

assembling, by a work metric assembly system, task status information for all current work interval tasks,
transmitting the task status information by the work metric assembly system to the data processing system,
determining, by the data processing system, whether all project tasks have been completed,
responsive to a determination that all project tasks have not been completed, updating the current time interval and repeating the task criticality and scheduling actions at the beginning of the updated current time interval and the task status assessment actions at the end of the updated current time interval.

2. A method according to claim 1 wherein the action of calculating a task criticality for each task includes

determining a measured task duration from the task status information,
determining an estimated remaining task duration based on the task status information, the current criticality factor information, and the task uncertainty model,
calculating a remaining float value based on the measured task duration and estimated remaining duration to completion for the task, and
calculating a ratio of the remaining float value to a planned float value derived from the estimated project schedule.

**3.** A method according to claim 1 wherein the action of assembling task status information for all current work interval tasks includes:

receiving task status information from each work cell to which a task was assigned for the current time interval.

**4.** A method according to claim 3 wherein the task status information includes task completion percentage information and estimated time-to-completion information.

**5.** A method according to claim 3 wherein the task status information from each work cell is provided by a work supervisor via a user interface of the work cell.

**6.** A method according to claim 1 wherein the action of assembling task status information for all current work interval tasks includes:

receiving sensor information from an automated sensor system configured for directly measuring a task completion parameter associated with a current work interval task; and
using the task completion parameter to determine task completion percentage information.

**7.** A method according to claim 1 wherein the action of determining a task uncertainty model for each task in the project task set is accomplished, at least part, through the application of machine learning to establish an optimum uncertainty estimation model for each task.

**8.** A method according to claim 1 wherein the one or more variable criticality factors comprises at least one of the set consisting of a work environment parameter, a resource availability parameter, and a material availability parameter.

**9.** A method according to claim 8 wherein the work environment parameter is a forecasted weather-related parameter for the current time interval, the weather-related parameter being one of the set consisting of a high or low temperature, a high or low atmospheric pressure, a high or low relative humidity level, a wind velocity, and a precipitation probability.

**10.** A method according to claim 1 wherein the action of preparing an estimated project schedule further includes

calculating and adding to at least one of the feeder task chains one or more feeding buffers.

**11.** A method according to claim 1 wherein the action of calculating a project buffer comprises:

determining a safety removed for each task in the critical chain;
calculating the square root of the sum of the squares (SRSS) of the safety removed values for the tasks in the critical chain;
for each task of the critical chain,

multiplying the task safety removed by a predetermined percentage to obtain a trial safety removed,
comparing the trial safety removed to the SRSS and the task safety removed, responsive to a determination that the trial safety removed is less than or equal to the SRSS and less than or equal to the task safety removed for the task,

adding a predetermined percentage of the task safety removed to the trial safety removed and repeating the comparing action,

responsive to a determination that the trial safety removed is greater than the SRSS and less than or equal to the task safety removed, setting the task safety removed to be equal to the trial safety removed; and

adding the task safety removed values for all tasks in the critical chain to obtain the project buffer.

12. A method according to claim 11 wherein the action of calculating a project buffer further comprises:

determining whether a predetermined environmental condition will apply to at least one task in the critical chain during execution of such at least one task; and
responsive to a determination that the predetermined environmental condition will apply, adding or subtracting to the project buffer to account for the increased or decreased uncertainty resulting from the predetermined environmental condition.

13. A method according to claim 1 wherein at the beginning of each current project time interval and prior to carrying out the set of task criticality and scheduling actions, the method comprises:

determining whether a change in project scope has occurred; and
responsive to a determination that a change in project scope has occurred, repeating the actions of

receiving required deliverable information defining a project scope,
determining a project task set,
determining for each task in the project task set, materials required, task precedence logic, and a task uncertainty model,
preparing a task sequence,
determining for each task a set of one or more resources required,
receiving resource constraint information,
identifying a critical task chain, and
preparing an estimated project schedule.

14. A project management system comprising:

an automated planning data processing system configured for

receiving required deliverable information defining a project scope,
determining a project task set comprising a plurality of tasks necessary to accomplish the project scope,
determining for each task the materials required, task precedence logic and a task uncertainty model;

an automated scheduling data processing system in communication with the planning data processing system and configured for

preparing a task sequence for the project task set,
determining for each task in the project task set, a set of one or more resources required,
receiving resource constraint information;
identifying a critical task chain for the project task set, and
preparing an estimated project schedule including a project buffer,

an automated criticality data processing system in communication with the planning and scheduling data processing systems and configured for

receiving current criticality factor information,
receiving task status information for tasks for which work has been initiated,
calculating a task criticality for each task using the task uncertainty model for the given task, the current criticality factor information, and the task status information, and
prioritizing the project tasks based at least in part on their task criticality;

an automated manufacturing scheduling data processing system in communication with the criticality data processing system and one or more work cell stations and configured for

identifying project tasks for which work should be done and assigning each said task as a current work interval task to a work cell, and
transmitting a work request for each current work interval task to a work cell station associated with the work cell to which said current work interval task is assigned; and

an automated metric assembly data processing system in communication with the one or more work cell stations and the planning, criticality, and manufacturing scheduling data processing systems and configured for

assembling task status information for all current work interval tasks, and transmitting the task status information to the criticality data processing system.

# VISUAL BUILD MANAGEMENT

Figure 1

# Figure 2

M100

```
                    Start  ── S102

        Define project scope  ── S110

       Assemble task information  ── S120

       Identify the Critical Chain  ── S130

     Prepare critical chain project plan  ── S140
```

Measurable Criticality Factors → Determine task criticality  ── S150

```
         Prioritize tasks  ── S160

    Assign tasks and allocate resources  ── S170

        Execute task plan  ── S180

   Measure task and project completion status  ── S190

         Project complete?  ── S192
```

No → Update time interval  ── S193 → Changes to project scope?  ── S194

No → Determine task criticality

Yes → Define project scope

Yes → End  ── S198

Enterprise Resource Planning (ERP) System

Surveys

Internet of things Inputs

Standards

Human and Machine Feedback Driven Outputs

— Physical capacity (non-labor constraints)
— Personal safety margins
— Tool dimensions (jigs, scaffolds, fixtures, ladders)
— Physical surveys

Footprint

— Crane availability
— Machines status and maintenance
— Services and support (power, compressed air)

Tools

— Consumables
— Stock and part-numbered material
— Asset tracking and management of units

Material

— Cold or heat
— Rain or snow
— Day or night
— Wind (crane operations)
— Indoor or outdoor
— Humidity (paint)
— Ventilation
— Macros scales (seasons)

Environment

— Distance offset of the work area to nearest obstacle
— Physical access
— Overhead or down-hand
— Trade-specificmetrics
— Number of core steps in a process
— Certifications
— Craftsman experience (apprentice, journeyman, expert)
— Whether contracted labor or staff services

Standards

Uncertainty Models

Figure 3

# Figure 4

M200

```
┌─────────────────────────────────┐  ⌐ S210
│      Calculate safety removed     │
└─────────────────────────────────┘
                 │
                 ▼
┌─────────────────────────────────┐  ⌐ S220
│        Calculate SRRS and         │
│       revised safety removed      │
└─────────────────────────────────┘
                 │
                 ▼
              ◇ S230
          Is                  Yes    ┌──────────────────┐  ⌐ S235
     SRRS ≥ ROT ?  ──────────────►  │  Increase revised │
                                     │  safety removed   │
                                     └──────────────────┘
                 │
                No
                 │
                 ▼
              ◇ S240
            Is
          Safety            Yes      ┌──────────────────┐  ⌐ S245
      removed > 2σ  ──────────────► │  Assign 100% of   │
      from mean for                  │ safety removed for │
        any task?                    │    these tasks     │
                                     └──────────────────┘
                 │
                No
                 │
                 ▼
┌─────────────────────────────────┐  ⌐ S260
│         Calculate buffer          │
└─────────────────────────────────┘
```

## Figure 5

Calculate Safety Removed — S210

Calculate SRRS and ROT Safety Removed — S220

M200a

Is SRRS ≥ ROT ? — S230

Yes → Calculate new ROT Safety removed — S235

No

Is Safety removed > 2σ from mean for any task? — S240

Yes → Assign 100% of safety removed for these tasks — S245

No

Calculate buffer — S260

Is special condition met? — S270

Yes → Determine adjustment to buffer — S275

No

Final buffer amount — S280

Figure 6

S310 Appropriate resources

S320 Set first available start

S330 Identify started tasks and "available today" tasks

S340 Sort tasks based on criticality

M300

S350 Iterate on tasks based on order of criticality

S358 Remove task from available task list and reschedule to future availability date

S352 Out of available tasks?

S354 Non-labor resources available?

S356 Labor resources available?

S170 Assign tasks and allocate resources

S360 Increment to next time interval

EP 3 477 560 A1

Figure 7

| | 1 | 2 | 3 | 4 | 5 | 4 Sep | 11 Sep | 18 Sep | 25 Sep 2019 | |
|---|---|---|---|---|---|---|---|---|---|---|
| | | | | | | | | | Data | Score |
| Compliance to TEP | ≤64 or ≥100 | 65 to 69.95 or to 99 | 70 to 74.90 or to 99 | 75 to 79.90 or to 94 | 80 to 84 | 82% | 79% | 79% | 74% | 3 |
| CPI | ≤0.84 | 0.85 to 0.89 | 0.90 to 0.94 | 0.95 to 0.99 | ≥1.00 | 1.01 | 1.01 | 1.01 | 1.00 | 5 |
| Overtime % | ≥25 | 20 to 24 | 15 to 19 | 10 to 14 | ≤9 | 16% | 15% | 16% | 13% | 4 |
| % completed <HP | ≤59 | 60 to 64 | 65 to 69 | 70 to 74 | ≥175 | 77% | 75% | 81% | 80% | 5 |
| Work Packages in WIP | ≥110 | 105 to 109 | 100 to 104 | 95 to 99 | ≤4 | 112% | 123% | 121% | 125% | 1 |
| Total Throughput | ≤79 | 80 to 84 | 85 to 89 | 90 to 94 | ≥95 | 77% | 77% | 78% | 79% | 1 |
| Weekly Total | | | | | | x | x | x | x | 19 |
| Average Since _____ | | | | | | x | x | x | x | x |

Figure 8
Example of Work Cell
Score Card

EP 3 477 560 A1

Figure 9

EP 3 477 560 A1

| Project | Task Name | Task# | Est. Start | Pred. | Succ. | Rem. Dur. | Task Criticality % | Resources |
|---|---|---|---|---|---|---|---|---|
| Project #1 | Weld backing structure for large machinery | 20 | In Progress | 15 [c], 19 [c] | 21 | 1 | 31% | Welder [1] |
| Project #1 | Fit Inspect MCT between small and large machinery compartments | 60 | 11/17/18 | 59 [c] | 61 | 1 | 171% | Inspector [1] |
| Project #1 | Weld MCT between small and large machinery compartments | 61 | 11/17/18 | 60 | 62 | 1 | 176% | Welder [1] |
| Project #1 | NDT large machinery foundation and backing structure | 21 | 11/18/18 | 15 [c], 20 | 37 | 1 | 41% | Inspector [1] |

Interactive Visual Agenda showing planned and realized progress of a project

Figure 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/106713 A1 (KAPOOR AJAI [US] ET AL) 5 May 2011 (2011-05-05) * abstract * * paragraph [0006] - paragraph [0014] * * paragraph [0032] - paragraph [0050] * ----- | 1-14 | INV. G06Q10/04 G06Q10/06 |
| X | US 2006/167732 A1 (RICKETTS JOHN A [US]) 27 July 2006 (2006-07-27) * abstract * * paragraph [0027] - paragraph [0032] * * paragraph [0042] * ----- | 1-14 | |
| X | EP 2 763 084 A1 (BOEING CO [US]) 6 August 2014 (2014-08-06) * abstract * * paragraph [0020] - paragraph [0033] * ----- | 1-14 | |
| X | AU 2013 200 568 A1 (ACCENTURE GLOBAL SERVICES LTD) 21 February 2013 (2013-02-21) * abstract * * page 1, line 21 - page 4, line 13 * ----- | 1-14 | |

TECHNICAL FIELDS
SEARCHED (IPC)

G06Q

The present search report has been drawn up for all claims

| Place of search | Date of completion of the search | Examiner |
|---|---|---|
| Munich | 19 November 2018 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 20 3381

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2018

| Patent document cited in search report | | Publication date | Patent family member(s) | Publication date |
|---|---|---|---|---|
| US 2011106713 | A1 | 05-05-2011 | NONE | |
| US 2006167732 | A1 | 27-07-2006 | NONE | |
| EP 2763084 | A1 | 06-08-2014 | AU 2013266984 A1 | 21-08-2014 |
| | | | BR 102014002220 A2 | 02-12-2014 |
| | | | CA 2835563 A1 | 04-08-2014 |
| | | | CN 103971195 A | 06-08-2014 |
| | | | EP 2763084 A1 | 06-08-2014 |
| | | | JP 6351988 B2 | 04-07-2018 |
| | | | JP 2014154152 A | 25-08-2014 |
| | | | KR 20140099815 A | 13-08-2014 |
| | | | US 2014222492 A1 | 07-08-2014 |
| AU 2013200568 | A1 | 21-02-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62579463 B
- US 6501473 B